# EUROPÄISCHE PATENTSCHRIFT

(11) **EP 0 339 238 B1**
(45) Veröffentlichungstag und Bekanntmachung des Hinweises auf die Patenterteilung: **14.04.1993**
(21) Anmeldenummer: 89104657.5
(22) Anmeldetag: 16.03.1989
(51) Int. Cl.: B60R 13/06

(54) **Abdichtungssystem an einer Türöffnung von Kraftfahrzeugen**
Sealing arrangement for a door opening of motorvehicles
Dispositif d'étanchéité pour une ouverture de porte de véhicules automobiles

(30) Priorität: 18.04.1988 DE 3812925
(43) Veröffentlichungstag der Anmeldung: 02.11.1989
(73) Patentinhaber: MAN Nutzfahrzeuge Aktiengesellschaft, 80976 München (DE)
(72) Erfinder: Schmidt, Werner, D-8000 München 50 (DE); Watzek, Gerhard, D-8000 München 45 (DE)

(56) Entgegenhaltungen:
- FR-A- 2 415 018
- FR-A- 2 528 775

## Beschreibung

Die Erfindung betrifft ein Abdichtsystem an einer Türöffnung von Kraftfahrzeugen, insbesondere Nutzfahrzeugen, mit einer Einstieg-Schutzschiene und einer Türdichtung.

Praxiserfahrungen haben gezeigt, daß im Bereich der Einstieg-Schutzleiste vorzeitiger Verschleiß bzw. Beschädigung der Türdichtung auftritt. Ursache ist die mangelnde Abrieb- und Weiterreißfestigkeit des erwünscht weichen Schlauchmaterials der Dichtung.

Aus der FR-A-2 528 775 ist ein Abdichtungssystem an einer Türöffnung von Kraftfahrzeugen mit einer im Fußbereich angeordneten, die Türdichtungs bereichsweise übergreifenden Einstieg-Schutzschiene, bekannt.

Der Erfindung liegt die Aufgabe zugrunde, den Verschleiß der Türdichtung bei gleichzeitigem Erhalt ihrer Dichtfunktion zu reduzieren.

Dies wird erfindungsgemäß dadurch erreicht, daß die Türdichtung im Fußbereich, zumindest bereichsweise, von einer abriebfesten, gleichzeitig aber auch dauerelastischen Schutzleiste eng zur Außenkontur übergriffen ist, wobei die Schutzleiste mit der Einstieg-Schutzschiene oder mit dem Türdichtungs-Klemmprofil einstückig verbunden oder an diese(s) befestigbar ist bzw. die Schutzleiste bei Wegfall der Einstieg-Schutzschiene an oder unter dem Türdichtungs-Klemmprofil angebracht wird. Solcherart wird der Mangel beseitigt, ohne die Funktion der Türdichtung negativ zu beeinflussen. Der Werkstoff der Schutzleiste muß abriebfest, gleichzeitig aber auch dauerelastisch sein und darf bei Kälte nicht verspröden. Deshalb ist vorzugsweise ein Thermoplast oder Gummi als Werkstoff zu wählen.

Einstieg-Schutzschiene und Schutzleiste können, z.B. im Koextrusionsverfahren, einstückig mit verschiedenen Werkstoffen gefertigt werden. Dies ist allerdings sehr aufwendig und teuer. Nach einer anderen Variante der Erfindung werden Einstieg-Schutzschiene und Schutzleiste als Einzelteile gefertigt und im nachhinein miteinander verbunden, z.B. durch Einklemmen. Das hat den Vorteil, daß für die Einstieg-Schutzschiene ein härterer und für die Schutzleiste ein weicherer Werkstoff gewählt werden kann. Ist keine Einstieg-Schutzschiene vorhanden, so kann die Schutzleiste auch an oder unter dem Türdichtungs-Klemmprofil angebracht werden. Die Schutzleiste muß nicht zwangsläufig auf der ganzen Breite des Einstiegs vorhanden sein. Funktionell reicht es, wenn sie nur im exponierten Fußbereich, also dort, wo der Schuh beim Ein- bzw. Aussteigen die Türdichtung streift bzw. berühren kann, vorhanden ist.

Weitere Vorteile und Merkmale der Erfindung sind den Ansprüchen, der Figurenbeschreibung und den Zeichnungen zu entnehmen.

Die Erfindung ist in zwei Ausführungsbeispielen dargestellt und beschrieben. Es zeigen:
- Fig. 1: ein Abdichtungssystem mit einstückiger Einstiegs-Schutzschiene und Schutzleiste,
- Fig. 2: ein Abdichtungssystem mit Einstiegs-Schutzschiene und Schutzleiste in Klemmverbindung.

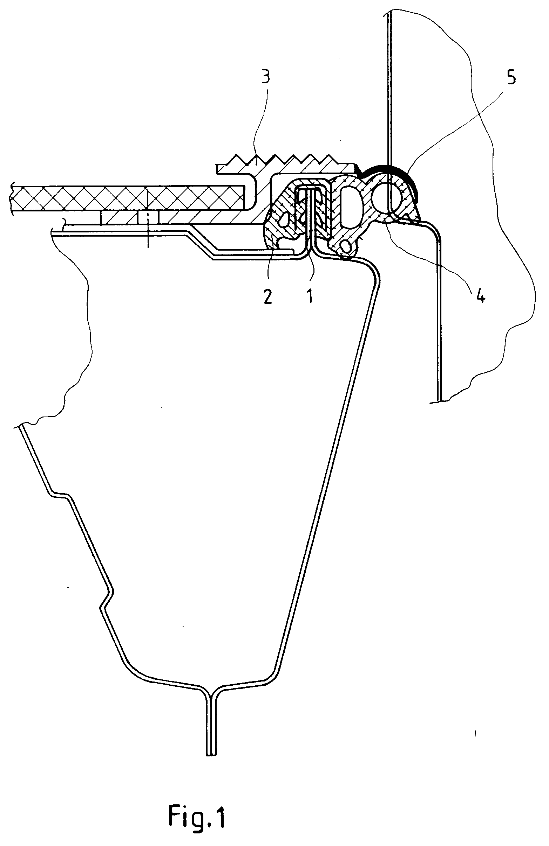

In Fig. 1 ist ein Ausschnitt des Türrahmens 1 gezeigt, an dessen zusammengelappten Enden ein Türdichtungs-Klemmprofil (2) überstülpt ist. Daran ist die Türdichtung 4, als Schlauchdichtung ausgelegt, fest angebracht. Über dem Türdichtungs-Klemmprofil (2) ist die Einstiegs-Schutzschiene 3 angeordnet. Einstückig mit dieser verbunden ist die Schutzleiste 5, die den äußeren Schlauchteil der Türdichtung 4 kontureneng umgreift. Solcherart wird erreicht, daß die weiche und empfindliche Türdichtung 4 geschützt wird, indem die Schutzleiste 5 den Trittansatz der einsteigenden Personen aufnimmt. Andererseits aber, obwohl abriebfest ausgelegt, ist die Schutzschiene 5 doch wiederum so elastisch, daß sie dem Druck der verschließenden Tür ohne weiteres folgen kann.

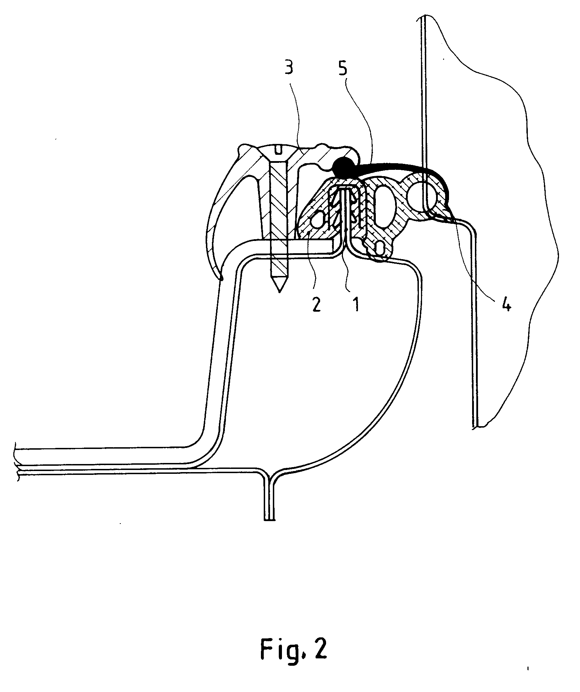

Fig. 2 zeigt grundsätzlich dieselben Elemente, mit dem Unterschied, daß Einstiegs-Schutzschiene 3 und Schutzleiste 5 nicht einstückig ausgebildet sind, vielmehr weist die Schutzleiste 5 ein verdicktes Ende auf, das in einem Hohlraum der Einstiegs-Schutzschiene 3 ist.

### Bezugszeichenliste

- 1: Türrahmen
- 2: Türdichtungs-Klemmprofil
- 3: Einstieg-Schutzschiene
- 4: Türdichtung
- 5: Schutzleiste

## Patentansprüche

1. Abdichtungssystem an einer Türöffnung von Kraftfahrzeugen, insbesondere Nutzfahrzeugen, mit einer Einstieg-Schutzschiene und einer Türdichtung, dadurch gekennzeichnet, daß die Türdichtung (4) im Fußbereich, zumindest bereichsweise, von einer abriebfesten, gleichzeitig aber auch dauerelastischen Schutzleiste (5) eng zur Außenkontur übergriffen ist, wobei die Schutzleiste (5) mit der Einstieg-Schutzschiene (3) oder mit dem Türdichtungs-Klemmprofil (2) einstückig verbunden oder an diese(s) befestigbar ist bzw. wobei die Schutzleiste (5) bei Wegfall der Einstieg-Schutzschiene (3) an oder unter dem Türdichtungs-Klemmprofil (2) angebracht wird.

2. Abdichtungssystem nach Anspruch 1, dadurch gekennzeichnet, daß die Schutzleiste (5) aus einem Thermoplast oder aus Gummi gefertigt ist.

3. Abdichtungssystem nach Anspruch 1 oder 2, dadurch gekennzeichnet, daß die Schutzleiste (5) an der Einstieg-Schutzschiene (3) angespritzt ist.

4. Dichtungssystem bei einem oder mehreren der Ansprüche 1 bis 3, dadurch gekennzeichnet, daß die Schutzleiste (5) an der Einstieg-Schutzschiene (3) angeklemmt ist.

## Claims

1. Sealing system on a door opening of motor vehicles, particularly commercial vehicles, with a protective rail for the entrance and a door seal, characterised by the fact that the door seal (4) in the foot area, at least in parts of the area, is, towards the outer contours, closely overlapped by an abrasionproof but also permanently elastic protective strip (5) which is connected as one piece with the protective rail (3) for the entrance or the clamping profile (2) of the door seal or attachable to either or is attached to or below the clamping profile (2) of the door seal if the protective rail (3) for the entrance is not present.

2. Sealing system as under Claim 1, characterised by the fact that the protective strip (5) is made of thermoplastic material or rubber.

3. Sealing system as under Claim 1 or 2, characterised by the fact that the protective strip (5) is sprayed on to the protective rail (3) for the entrance.

4. Sealing system as under one or several of the Claims 1 to 3, characterised by the fact that the protective strip (5) is clamped on the protective rail (3) for the entrance.

## Revendications

1. Dispositif d'étanchéité pour une ouverture de porte de véhicules automobiles, en particulier de véhicules utilitaires, avec un contre-rail d'accès et un joint d'étanchéité de porte, dispositif d'étanchéité caractérisé en ce que le joint d'étanchéité de la porte (4) est enserré de façon étroite sur le contour extérieur dans la zone des pieds, du moins partiellement, par un bandeau de protection (5), résistant à l'abrasion, mais aussi en même temps durablement élastique, le bandeau de protection (5) étant relié d'une seule pièce au contre-rail d'accès (3) ou au profilé de pincement (2) du joint d'étanchéité de porte ou pouvant être fixé sur celui-ci ou bien dans le cas où l'on se passe du contre-rail d'accès (3) il est monté sur ou sous le profilé de pincement (2) du joint d'étanchéité de la porte.

2. Dispositif d'étanchéité selon la revendication 1, caractérisé en ce que le bandeau de protection (5) est fabriqué en une matière thermoplastique ou en caoutchouc.

3. Dispositif d'étanchéité selon la revendication 1 ou 2, caractérisé en ce que le bandeau de protection (5) est injecté sur le contre-rail d'accès (3).

4. Dispositif d'étanchéité selon l'une ou plusieurs des revendications 1 à 3, caractérisé en ce que le bandeau de protection (5) est pincé contre le contre-rail d'accès (3).
